# FASCICULE DE BREVET EUROPEEN

(11) **EP 0 658 704 B1**
(45) Date de publication et mention de la délivrance du brevet: **04.02.1998**
(21) Numéro de dépôt: 94402877.8
(22) Date de dépôt: 14.12.1994
(51) Int. Cl.: F16H 1/28

(54) **Transmission à engrenages orbitaux et charge répartie**
Planetengetriebe mit Lastverteilung
Planetary transmission with distributed load

(30) Priorité: 15.12.1993 FR 9315053
(43) Date de publication de la demande: 21.06.1995
(73) Titulaire: Hispano-Suiza, 75015 Paris (FR)
(72) Inventeur: Lefranc, Bénédicte Anne-Marie, F-75012 Paris (FR); Linet, Hugues Henri Raymond, F-92400 Courbevoie (FR); Virmoux, Michel Roger Charles, F-92700 Colombes (FR)
(74) Mandataire: Berrou, Paul

(56) Documents cités:
- FR-A- 1 106 128
- GB-A- 1 367 343
- US-A- 1 586 309
- US-A- 3 303 713

## Description

L'invention se rapporte aux transmissions à engrenages orbitaux, appelées aussi transmissions épicycloïdales, et plus particulièrement aux transmissions de ce type pouvant comporter un nombre élevé de satellites. De telles transmissions permettent de transmettre une puissance importante avec une masse et un encombrement réduit, ce qui les destine plus particulièrement mais non exclusivement à l'aéronautique.

Les transmissions à engrenages orbitaux sont des dispositifs bien connus pour transmettre un couple avec une forte puissance et pour en multiplier ou diviser la vitesse de rotation.
Dans sa forme la plus simple, dite à simple étage une transmission de ce type comporte un engrenage central appelé planétaire intérieur, un engrenage extérieur appelé aussi planétaire extérieur ainsi qu'un ou plusieurs engrenages intermédiaires ou satellites s'engrenant simultanément sur le planétaire intérieur et sur le planétaire extérieur. Les satellites sont montés tourillonnants sur des arbres tenus par un porte-satellites.
Selon l'effet recherché, l'un de ses trois organes, à savoir le planétaire intérieur, le planétaire extérieur ou le porte-satellites est fixe alors que les deux autres sont tournants. L'un des organes tournants sert à l'entrée du mouvement alors que l'autre sert à la sortie.

Pour une même puissance à transmettre, l'augmentation du nombre de satellites et l'utilisation de métaux à haute ténacité permet de réduire la taille des engrenages, et en conséquence de réduire et d'alléger la transmission épicycloïdale. En contrepartie, la puissance dissipée dans la transmission s'évacue plus difficilement et la température de fonctionnement de cette transmission est plus élevée.
Dans de telles conditions d'encombrement et de température de fonctionnement, une bonne répartition de l'effort à transmettre sur tous les satellites est avantageusement obtenue par le montage de ces satellites sur des arbres flexibles métalliques. Plus précisément, ces arbres sont encastrés par une extrémité dans le porte-satellites, alors que l'autre extrémité est libre et supporte le satellite par l'intermédiaire d'un dispositif tourillonnant et rotulant. Ce dispositif peut comporter un palier à roulement rotulant assurant simultanément ces deux fonctions, c'est à dire dont l'un des chemins de roulement est sphérique. Ce dispositif peut au contraire comporter un palier à roulement non rotulant associé à une rotule distincte.

On connait par le brevet US 3 303 713 une transmission à engrenages orbitaux dont les satellites 15 sont montés sur l'extrémité libre 17 d'un arbre flexible 13, l'effet rotulant étant obtenu par une flexion en sens inverse de ladite extrémité libre 17. Cette solution présente l'inconvénient de générer sur le satellite un couple de basculement très important repris par l'engrènement des dentures des pignons et réduisant de ce fait la durée de vie desdites dentures.

On connait aussi par le brevet US 1 586 309 une transmission à engrenages orbitaux ne présentant pas cet inconvénient, les satellites 4 étant montés par l'intermédiaire de paliers rotulants à billes 11 sur l'extrémité libre d'arbres 12 montés eux-mêmes pivotants à leur autre extrémité avec un maintien en position par des ressorts 26 et des vis de réglage 23. Une telle transmission présente l'inconvénient d'être complexe, de nécessiter beaucoup de pièces et d'être volumineuse. En particulier, elle ne peut pas comporter un nombre élevé de satellites. Cette transmission ne permet en conséquence pas de transmettre une puissance importante avec une masse et un encombrement réduit.

Le dispositif tourillonnant et rotulant tel qu'il vient d'être décrit est suffisant si la transmission utilise des engrenages à denture droite ou "en chevrons", car chaque satellite oriente automatiquement son axe de tourillonnement par rapport au planétaire intérieur et au planétaire extérieur. Cependant, les engrenages à denture droite ont l'inconvénient de provoquer des vibrations dans la transmission du mouvement de rotation, alors que les engrenages à denture "en chevrons" ou l'inconvénient d'être coûteux et d'exiger une grande précision de réalisation pour que l'effort transmis soit bien réparti sur les dentures.

Les engrenages à denture hélicoïdale ne présentent pas ces inconvénients. Ils sont peu coûteux par rapport aux engrenages à denture "en chevrons" et autorisent une transmission sans vibrations avec une excellente répartition de l'effort le long des dentures.

Les engrenages à denture hélicoïdale sont cependant le siège de forces parasites axiales, qui s'exercent sur les dentures et qui forment un couple tendant à renverser les engrenages dans le plan définit par les axes de ces engrenages. Dans le cas des satellites maintenus rotulants, ceux-ci ne seraient plus maintenus que par l'appui de leurs dentures contre les dentures du planétaire intérieur et du planétaire extérieur, ce qui provoquerait une usure prématurée de ces dentures.

L'objet de l'invention est une transmission épicycloïdale comportant notamment un planétaire intérieur, un planétaire extérieur, un porte-satellites, ainsi qu'une pluralité de satellites s'engrènant simultanément sur le planétaire intérieur et le planétaire extérieur, chaque satellite étant monté tourillonnant à l'extrémité d'un arbre flexible dont l'autre extrémité est solidaire du porte-satellites. L'invention est remarquable en ce que les engrenages sont hélicoïdaux, en ce que les satellites sont montés rotulants et en ce que chaque satellite est maintenu en position par un élément coulissant dans un plan parallèle à l'axe géométrique de rotation du satellite et perpendiculaire aux plans définis par l'axe géométrique de rotation du satellite et l'axe de rotation du planétaire. Cet élément coulissant est déporté par rapport à la rotule, de préférence du côté du porte-satellites.

Dans une première forme de réalisation de l'invention, chaque satellite est monté sur un palier à roulement rotulant, c'est à dire comportant un chemin de roulement sphérique, le satellite étant solidaire de la bague intérieure d'un second palier à roulement alors que la bague extérieure de ce second palier coulisse entre deux faces planes et parallèles entre elles, parallèles à l'axe géométrique du satellite et perpendiculaires au plan défini par l'axe du satellite et l'axe du planétaire

Le palier est de préférence déporté vers le porte-satellites, et sa bague extérieure comporte à sa périphérie deux surfaces planes et parallèles sur lesquelles elle coulisse.

Dans une seconde forme de réalisation de l'invention, chaque satellite est monté sur un palier droit non rotulant. La bague intérieure de ce palier est montée sur l'arbre par l'intermédiaire d'une rotule, et cette bague est solidaire de l'extrémité d'au moins un doigt dont l'autre extrémité coulisse dans une rainure comportant deux faces planes et parallèles entre elles, parallèles à l'axe géométrique de rotation du satellite et perpendiculaires au plan défini par l'axe du satellite et l'axe du planétaire.

Les doigts sont de préférence orientés vers le porte-satellites. On préférera deux doigts diamétralement opposés par rapport à l'axe géométrique de rotation du satellite. Les rainures seront avantageusement réalisées dans un épaulement de l'arbre flexible.

L'invention présente l'avantage d'autoriser des transmissions épicycloïdales très compactes, entièrement métalliques, c'est à dire sans éléments déformables en matériau organique, et pouvant de ce fait fonctionner à des températures élevées.

L'invention a permis d'obtenir des réducteurs comportant jusqu'à 7 satellites et capables de transmettre 30 MW à 2000 tours/minute en sortie. Le sur-effort exercé sur un satellite par rapport aux autres peut être limité à 20 % avec des arbres flexibles et un porte-satellites en acier. Ce sur-effort peut être ramené à 10 % en utilisant des arbres flexibles et un porte-satellites en titane qui à résistance égale sont deux fois plus souples.

L'invention sera mieux comprise au vu de la description détaillée de trois exemples de réalisation donnés à titre non limitatif, ainsi que des figures annexées.

La figure 1 illustre un premier exemple de réalisation de l'invention dans laquelle le palier supportant le satellite assure aussi une fonction de rotule.

La figure 2 est une coupe selon AA du second palier maintenant le satellite en position.

La figure 3 illustre un second exemple de réalisation de l'invention comportant une rotule distincte du palier supportant le satellite.

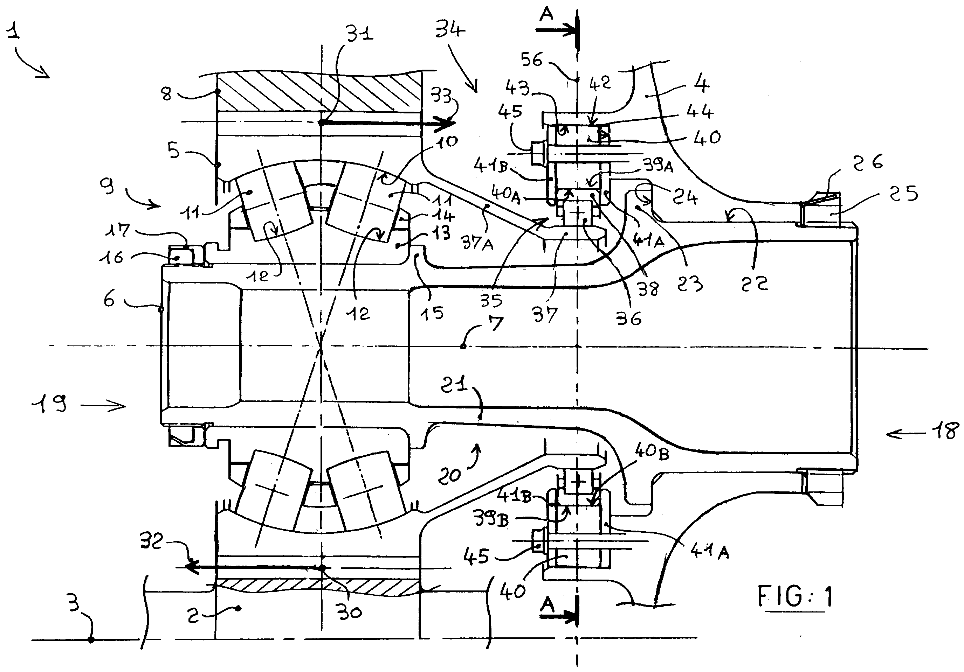

On se reportera en premier lieu à la figure 1. La transmission 1 comporte un engrenage central 2, appelé aussi planétaire central, d'axe géométrique 3, un porte-satellites 4 centré lui aussi sur l'axe géométrique 3, un ou plusieurs engrenages 5, appelés aussi satellites, lesdits satellites 5 tourillonnant chacun sur un arbre 6 d'axe géométrique 7, cet arbre 6 étant lui même solidaire du porte-satellites 4, ainsi qu'un engrenage à denture intérieure 8 entourant les satellites 5 et appelé à ce titre planétaire extérieur. L'axe 7 constitue un axe géométrique de rotation du satellite 5. Les satellites 5 s'engrènent sur le planétaire intérieur 5 et sur le planétaire extérieur 8.
Lorsque le train épicycloïdal est utilisé en réducteur, le mouvement est introduit par le planétaire central 2. Selon le rapport de réduction choisi, le porte-satellites 4 ou le planétaire extérieur 8 est fixe, et le mouvement est récupéré sur celui de ces deux organes qui est mobile.

Chaque satellite 5 tourillone sur l'arbre 6 par l'intermédiaire d'un palier 9. Dans cet exemple, le palier 9 est un roulement à rotule. Ce type de roulement est bien connu. Dans cet exemple, la bague extérieure du palier 9 se confond avec le satellite 5. Elle comporte une piste de roulement externe 10 sphérique en appui sur les éléments roulants 11 qui sont dans cet exemple en forme de tonnelets. Les éléments roulants 11 s'appuient eux-mêmes sur des pistes de roulement 12 aménagées sur la bague intérieure 13 du palier 9. Les éléments roulants 11 sont maintenus espacés entre eux par des cages 14. Le palier 9 a de préférence deux rangées d'éléments roulants. La bague intérieure 13 est disposée sur l'arbre 6, en butée contre un épaulement 15 aménagé sur l'arbre 6, ladite bague intérieure 13 étant maintenue appuyée contre l'épaulement 15 par un écrou 16 lui-même freiné par une rondelle frein 17. L'arbre 6 est solidaire par une extrémité 18 au porte satellite 4 alors que son autre extrémité 19 est libre, le satellite 5 et son palier 9 étant disposés sur l'extrémité libre 19. L'arbre 6 comporte entre son extrémité solidaire 18 et son extrémité libre 19 une zone déformable 20 qui lui donne sa flexibilité.

Cette zone déformable 20 a de préférence une forme tubulaire à paroi mince 21.

Dans un mode de réalisation préféré, l'arbre 6 comporte à son extrémité 18 solidaire du porte satellites 4 une porté cylindrique 22 qui pénètre avec un jeu réduit ou négatif dans un alésage du porte satellite 4. La portée 22 est adjacente à un épaulement 23 situé du côté du satellite 5. L'épaulement 23 arrive en butée sur la face interne 24 du porte satellites 4. L'arbre 6 est bloqué sur le porte satellites 4 par un écrou 25 et une rondelle d'arrêt 26 opposés à l'épaulement 23.

Grâce à la souplesse de l'arbre 6, chaque satellite 5 peut se trouver simultanément en appui sur des dents du planétaire central 2 et les dents du planétaire extérieur 8, ce qui permet une excellente répartition de l'effort de transmission sur tous les satellites. La flexion de l'arbre 6 produit un décalage angulaire de son extrémité libre 19 supportant le palier 9, mais l'engrènement du satellite 5 sur les planétaires 2 et 8 maintient ce satellite 5 dans la bonne position grâce à la fonction de rotule assurée dans cet exemple par le palier 9.
Le sur-effort maximal imposé à un satellite est égal à l'écart à rattraper divisé par la souplesse de l'arbre 6, cet écart à rattraper dépendant lui-même des tolérances de fabrication. Ce sur-effort peut être abaissé en assouplissant l'arbre, soit dans l'exemple en augmentant la longueur de la paroi 21 ou en réduisant son diamètre ou son épaisseur. L'assouplissement de l'arbre 6 réduit aussi sa résistance. Afin de ne pas trop affaiblir cet arbre 6, il convient parfois de choisir un matériau présentant à distance égale un module d'élasticité plus faible que celui du matériau initialement choisi. Par exemple, en remplaçant de l'acier par un alliage de titane tel le TA6V qui présente un module d'élasticité deux fois plus faible, on peut doubler la souplesse de l'arbre sans réduire sa résistance.

Du fait que les engrenages sont hélicoïdaux, le satellite 5 est soumis au point 30 d'engrènement avec le planétaire central 2 et au point 31 d'engrènement avec le planétaire extérieur 8 respectivement à des forces de réaction 32 et 33 qui sont parallèles à l'axe géométrique de rotation 7 et de sens opposés. Ces forces de réaction 32 et 33 produisent donc un couple dit de renversement qui tend à faire basculer le satellite 5 dans le plan défini par les axes géométriques 3 et 7. Le palier à tonnelets 9 du satellite 5, qui assure aussi un effet de rotule, ne peut s'opposer à ce couple.
Les satellites 5 sont en conséquence associés chacun à un dispositif 34 de compensation du couple de renversement, lesdits dispositifs 34 empêchant lesdits satellites 5 de basculer sous l'effet de ce couple.

Le dispositif de compensation 34 comporte un palier 35 centré sur l'axe 7 et déporté vers le porte-satellite 4 par rapport au satellite 5. Ce palier 35 comporte une première bague solidaire du satellite 5 et une seconde bague solidaire du porte-satellite 4, mais conservant par rapport à lui un degré de liberté suivant une direction perpendiculaire au plan défini par les axes géométriques de rotation 3 et 7.

Dans un mode de réalisation préféré, le palier 35 comporte des rouleaux cylindriques 36. La bague intérieure 37 dudit palier 35 est solidaire du satellite 5 par une cloison cylindrique ou tronconique 37A. La bague extérieure 38 du palier 35 comporte à sa périphérie deux surfaces 39A et 39B planes, parallèles entre elles et perpendiculaires au plan défini par les axes 3 et 7. La bague extérieure 38 du palier 35 comporte à sa périphérie deux surfaces 39A et 39B planes, parallèles entre elles et perpendiculaires au plan défini par les axes 3 et 7. La bague extérieure 38 coulisse sur ses faces 39A et 39b suivant une direction perpendiculaire au plan défini par les axes 3 et 7 entre les faces 40A et 40B d'un guide 40, lesdits faces 40A et 40B étant elles même planes, parallèles entre elles, parallèles à l'axe 7 et perpendiculaires au plan défini par les axes 3 et 7.

On comprend que le coulissement permettant de maintenir le satellite 5 en position est la résultante de deux coulissements élémentaires : Le premier s'effectue par les surfaces 39A,39B et 40A,40B suivant une direction perpendiculaire au plan défini par les axes géométriques 3 et 7, alors que le second s'effectue par la bague intérieure 37 et les rouleaux 36 suivant la direction de l'axe 7, l'ensemble équivalent à un coulissement suivant un plan parallèle à l'axe 7 et perpendiculaire au plan défini par les axes 3 et 7.

Le guide 40 a une largeur un peu supérieure à la largeur de la bague extérieure 38, ledit guide 40 et ladite bague 38 étant pris en sandwich chacun entre deux plaques 41A et 41B radiales à l'axe géométrique de rotation 7. Ces plaques 41A et 41B recouvrent partiellement les faces latérales de la bague 38 et complètent ainsi le guidage de cette bague 38 suivant une direction perpendiculaire au plan défini par les axes 3 et 7.

Dans un mode de réalisation préféré, le guide 40 et les plaques 41A et 41B sont délimités radialement vers l'extérieur par une surface cylindrique 42. Le porte-satellites 4 comporte lui même un alésage ouvert du côté du satellite 5, ledit alésage étant délimité radialement vers l'extérieur par une paroi cylindrique 43 dont le diamètre est légèrement supérieur à celui de la surface 42, ledit alésage étant aussi délimité Latéralement par une paroi 44 plane et radiale à l'axe 7.
Sont disposés successivement dans cet alésage contre la paroi 44 la plaque 41A, le guide 40 avec la bague extérieure 38 et les rouleaux 36, et enfin la plaque 41B. L'ensemble est maintenu contre la surface 44 par des vis 45 qui traversent successivement la plaque 41B, le guide 40, la plaque 41A et qui se vissent dans le porte-satellites 4 à travers la paroi 44.

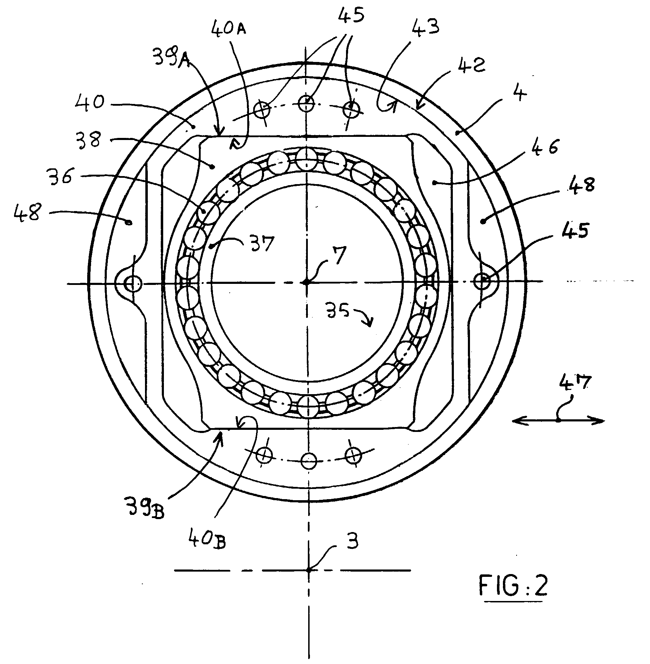

On se reportera maintenant à la figure 2 qui représente une coupe suivant AA du dispositif 34 de compensation du couple de renversement. Le guide 40 est disposé dans un alésage du porte-satellites 4 et est centré sur l'axe 7 par sa surface extérieure 42 au contact de la paroi cylindrique 43 dudit alésage.

Le guide 40 comporte un évidement intérieur 46 dans lequel est disposée la bague extérieure 38 du palier 35. Cette bague 38 se déplace à l'intérieur de l'évidement 46 suivant une direction 47 perpendiculaire au plan défini par les axes géométriques de rotation 3 et 7. la bague 38 coulisse par ses surfaces 39A et 39B entre les surfaces 40A et 40B du guide 40.

Des évidements supplémentaires 48 peuvent être aménagés dans le guide 40 pour alléger celui-ci.

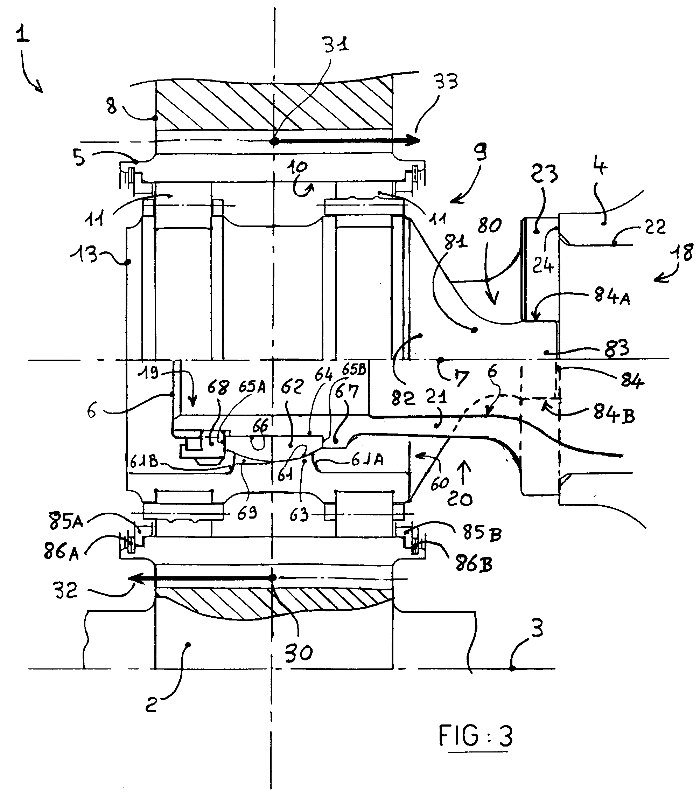

On se reportera maintenant à la figure 3 qui illustre un deuxième exemple de réalisation de l'invention.

Afin d'alléger cet exposé, on résumera dans un premier temps les points communs avec l'exemple précédent :

La transmission 1 comporte un planétaire central 2 et un planétaire extérieur 8 tous deux d'axe géométrique de rotation 3. Au moins un satellite 5 s'engrène simultanément sur le planétaire central 2 et le planétaire extérieur 8. Chaque satellite 5 tourillonne sur l'extrémité libre 19 d'un arbre 6, par l'intermédiaire d'un palier 9, cet arbre 6 étant rendu solidaire par son autre extrémité 18 à un porte-satellites 4. L'arbre 6 a un axe géométrique 7 qui est aussi un axe géométrique de rotation pour le satellite 5. Dans un mode de réalisation préféré, l'arbre 6 est emboîté du côté de son extrémité 18 par une portée cylindrique 22 dans un alésage du porte-satellites 4. La portée cylindrique 22 est adjacente à un épaulement 23 qui arrive en butée contre une surface 24 du porte-satellites 4, ladite surface 24 étant plane, radiale à l'axe 7 et tournée du côté du satellite 5. L'arbre 6 est ainsi maintenu en butée par un écrou 25 verrouillé par une rondelle d'arrêt 26.

L'arbre 6 comporte en son milieu une zone flexible 20 constituée par une paroi cylindrique ou tronconique 21 d'épaisseur réduite.

On décrira maintenant les points spécifiques à l'exemple 2 :

Le palier 9 est du type "à rouleaux" et comporte deux rangées d'éléments roulants 11 de forme cylindrique en contact avec l'alésage 10 cylindrique du satellite 5 et en contact avec les pistes 12 elles aussi cylindrique de la bague intérieure 13 du palier 9.
L'évidement 60 de la bague intérieure 13 comporte en son milieu une portée annulaire sphérique 61. La portée sphérique 61 est concave, centrée sur l'axe 7 et délimitée axialement par deux surfaces annulaires et radiales 61A et 61B.

Une rotule 62 comporte une surface extérieure sphérique convexe 63 qui pivote avec un jeu réduit à l'intérieur de la surface concave 61. Dans un mode de réalisation préféré, la rotule 62 a la forme d'une bague délimitée intérieurement par une surface cylindrique concave 64, et délimité aussi axialement par deux surfaces radiales en couronne 65A et 65B. La rotule 62 est montée sur l'arbre 6. Elle s'ajuste avec un serrage par sa surface intérieure 64 sur une portée cylindrique 66 de l'arbre 6 et arrive en butée par sa surface latérale 65B contre un épaulement 67 de l'arbre 6. La rotule 62 est maintenue en butée contre l'épaulement 67 par un écrou auto freiné 68 qui est vissé sur l'arbre 6 et qui appuie sur ladite rotule 62 par sa surface latérale 65A. Afin de pouvoir monter la rotule 62 à l'intérieur de la bague 13, l'évidement 60 a un diamètre au moins supérieur au diamètre extérieur de la rotule 62, c'est à dire au diamètre de la surface sphérique 63.

Deux évidements supplémentaires 69 symétriques l'un de l'autre par rapport à l'axe géométrique 7 sont disposés à l'intérieur de la bague 13 et mettent en communication les parties périphériques de l'espace intérieur définit par la surface sphérique concave 61 et le reste de l'évidement 60 vers l'un des côtés de la bague 13, lesdits évidements 69 débouchant ainsi par exemple sur la surface 61B. Ces évidements 69 sont délimités extérieurement respectivement par deux portions de surface cylindrique d'axe géométrique 7 et de diamètre au moins égal au diamètre de la surface sphérique 61. Ces évidements 69 sont aussi délimités latéralement par deux plans parallèles symétriques par rapport à l'axe géométrique 7 et dont la distance est légèrement supérieure à la largeur de la rotule 61, c'est à dire à la distance séparant les surfaces 65A et 65B qui délimitent axialement la rotule 62.

Ainsi, pour monter la rotule 62 à l'intérieur de la bague 13, il faut d'abord présenter la rotule 62 dans l'évidement 60, en regard des évidements 69, ladite rotule 62 étant tournée à 90°, c'est à dire que son axe géométrique est perpendiculaire à l'axe 7 et que ses surfaces latérales 65A et 65B sont dans l'alignement des surfaces délimitant latéralement les évidements 69. On introduit ensuite cette rotule 32 dans les évidements 69 jusqu'à ce que sa surface extérieure sphérique 63 arrive au contact de la surface sphérique concave 61. Enfin on fait pivoter la rotule 62 de 90°, son axe géométrique se confond alors avec l'axe 7 et ladite rotule se trouve alors prisonnière de la bague 13 à l'intérieur de sa surface concave 61. Le satellite 5 préalablement monté sur le palier 9 est ensuite disposé sur l'arbre 6 jusqu'à ce que la rotule 62 arrive au contact de l'épaulement 67, ladite rotule 62 étant alors immobilisée contre ledit épaulement 67 par l'écrou autofreiné 68.

Du fait que la transmission 1 comporte des engrenages hélicoïdaux, le satellite 5 est soumis au point 30 d'engrènement avec le planétaire intérieur 2 et au point 31 d'engrènement avec le planétaire extérieur 8 à des forces de réaction 32 et 33 qui sont parallèles à l'axe géométrique de rotation 7 et de sens opposés. Ces forces de réaction 32 et 33 produisent donc un couple dit de renversement qui tend à faire basculer le satellite 5 dans le plan défini par les axes 3 et 7. Le palier 9 monté dans cet exemple sur la rotule 62 ne peut s'opposer à ce couple. C'est pourquoi la transmission 1 comporte un dispositif 80 de compensation du couple de renversement exercé sur le satellite 5.

Dans un mode de réalisation préféré, le dispositif de compensation 80 comporte deux doigts 81 diamétralement opposés par rapport à l'axe géométrique 7, lesdits doigts 81 étant situés dans un plan perpendiculaire au plan défini par les axes géométriques 3 et 7 et coupant ce plan suivant l'axe géométrique 7, et dont une extrémité 82 est solidaire de la bague intérieure 13 du palier 9, alors que l'autre extrémité 83 de chaque doigt 81 s'ajuste avec un jeu réduit entre les parois 84A et 84B d'une rainure 84. Les deux rainures 84 sont fixes par rapport au porte-satellite 4 et peuvent être aménagées dans le porte satellite 4. Cependant dans un mode de réalisation préféré, les rainures 84 sont aménagées dans l'épaulement 23 de l'arbre 6, et les parois 84A et 84B desdites rainures 84 sont planes parallèles entre elles, parallèles à l'axe géométrique 7 et perpendiculaires au plan défini par les axes géométriques 3 et 7.

Ainsi, le dispositif 80 de compensation du couple de renversement empêche la bague intérieure 13 du palier 9 de pivoter autour de la rotule 62 dans le plan défini par les axes géométriques 3 et 7 sous l'effet du couple de renversement. Le dispositif 80 empêche aussi cette bague 13 de tourner sur la rotule 62 suivant l'axe géométrique de rotation 7, sous l'effet d'entraînement provoqué par la rotation du satellite 5 sur le palier 9.
Le dispositif 80 conserve par contre tous les autres degrés de liberté de la bague 13. A noter que le dispositif de compensation 80 peut aussi fonctionner avec un seul doigt 81, mais il se produit alors une force radiale agissant sur la rotule 62 qui accélère son usure et gène le débattement de la bague 13 autour de ladite rotule 62.

Par ailleurs, et afin d'empêcher le déplacement du satellite 5 le long de l'axe géométrique de rotation 7, la paroi de l'alésage 10 contre laquelle roulent les rouleaux 11 est délimitée à ses extrémités par deux bagues 85A et 85B maintenues chacune par les clips 86A et 86B.

## Revendications

1. Transmission à engrenages orbitaux et charge répartie, ladite transmission (1) comportant un engrenage planétaire central (2) d'axe géométrique de rotation (3), un engrenage planétaire extérieur (8) et au moins un satellite (5) s'engrènant simultanément sur le planétaire central (1) et le planétaire extérieur (8), les satellites (5) étant montés tourillonnants chacun sur un palier (9) sur l'extrémité libre (19) d'un arbre flexible (6) d'axe géométrique (7) dont l'autre extrémité (18) est solidaire du porte-satellite (4) caractérisé en ce que les engrenages sont hélicoïdaux, en ce que les satellites (5) tourillonnent sur des paliers (9) du type à rotule, et en ce que chaque satellite (5) est solidaire de la bague intérieure (37) d'un palier (35) dont la bague extérieure (38) coulisse suivant une direction perpendiculaire au plan défini par les axes géométriques (3) et (7) alors que la bague intérieure (37) coulisse suivant la direction de l'axe géométrique (7).

2. Transmission conforme à la revendication 1, caractérisée en ce que le palier (35) est déporté vers le porte-satellites (4).

3. Transmission conforme à la revendication 1 ou 2, caractérisée en ce que la bague extérieure (38) du palier (35) comporte à sa périphérie deux surfaces (39A) et (39B) planes et parallèles entre elles.

4. Transmission conforme à la revendication 3, caractérisée en ce que la bague extérieure (38) coulisse sur ses faces (39A) et (39B) entre les faces (40A) et (40B) d'un guide (40), lesdites faces (40A, 40B) étant elles-mêmes planes, parallèles entre elles, parallèles à l'axe (7) et perpendiculaires au plan défini par les axes (3) et (7).

5. Transmission à engrenages orbitaux et charge répartie, ladite transmission (1) comportant un engrenage planétaire central (2) d'axe géométrique de rotation (3), un engrenage planétaire extérieur (8) et au moins un satellite (5) s'engrènant simultanément sur le planétaire central (1) et le planétaire extérieur (8), les satellites (5) étant montés tourillonnants chacun sur un palier (9) sur l'extrémité libre (19) d'un arbre flexible (6) d'axe géométrique (7) dont l'autre extrémité (18) est solidaire du porte-satellites (4), caractérisé en ce que les engrenages sont hélicoïdaux, en ce que les satellites (5) tourillonnent sur des paliers (9) dont la bague intérieure (13) pivote sur une rotule (62) montée sur l'arbre (6), et en ce que ladite bague intérieure (13) est solidaire d'au moins un doigt (81) dont l'extrémité (83) s'ajuste entre les parois (84A) et (84B) d'une rainure (84), ladite rainure (84) étant fixe par rapport au porte-satellites (4), lesdites parois (84A) et (84B) étant planes, parallèles entre elles et à l'axe géométrique (7) et perpendiculaires au plan défini par les axes géométriques (3) et (7).

6. Transmission conforme à la revendication 5, caractérisée en ce que la bague intérieure (13) est solidaire de deux doigts (81) diamétralement opposés par rapport à l'axe géométrique (7).

7. Transmission conforme à la revendication 5 ou 6, caractérisée en ce que les rainures (84) sont aménagées dans un épaulement (23) de l'arbre (6).

## Patentansprüche

1. Umlaufrädergetriebe mit Lastverteilung, wobei das Getriebe (1) aufweist:
eine zentrale Planetenverzahnung (2) mit geometrischer Drehachse (3),
eine äußere Planetenverzahnung (8)
und wenigstens ein Satellitenrad (5), das gleichzeitig mit der zentralen Planetenverzahnung (2) und der äußeren Planetenverzahnung (8) kämmt,
wobei jedes der Satellitenräder (5) in einem Lager (9) auf dem freien Ende (19) einer flexiblen Welle (6) mit geometrischer Achse (7) drehbar montiert ist und das andere Ende (18) der Welle (6) mit dem Satellitenträger (4) fest verbunden ist,
**dadurch gekennzeichnet**,
daß die Verzahnungen Schrägverzahnungen sind,
daß die Satellitenräder (5) sich in Pendellagern (9) drehen
und daß jedes Satellitenrad (5) mit dem Innenring (37) eines Lagers (35) fest verbunden ist, dessen Außenring (38) in einer zu der durch die geometrischen Achsen (3, 7) definierten Ebene senkrechten Richtung gleitet, wenn der Innenring (37) in Richtung der geometrischen Achse (7) gleitet.

2. Getriebe nach Anspruch 1, dadurch gekennzeichnet, daß das Lager (35) in Richtung auf den Satellitenträger (4) versetzt ist.

3. Getriebe nach Anspruch 1 oder 2, dadurch gekennzeichnet, daß der Außenring (38) des Lagers (35) an seiner Peripherie zwei ebene und zueinander parallele Flächen (39A, 39B) aufweist.

4. Getriebe nach Anspruch 3, dadurch gekennzeichnet, daß der Außenring (38) auf den genannten Flächen (39A, 39B) zwischen den Flächen (40A, 40B) einer Führung (40) gleitet, die ihrerseits eben und zueinander parallel sind und parallel zur der Achse (7) und senkrecht zu der durch zu der durch die Achsen (3, 7) definierten Ebene verlaufen.

5. Umlaufradergetriebe mit Lastverteilung, wobei das Getriebe (1) aufweist:
eine zentrale Planetenverzahnung (2) mit geometrischer Drehachse (3),
eine äußere Planetenverzahnung (8)
und wenigstens ein Satellitenrad (5), das gleichzeitig mit der zentralen Planetenverzahnung (2) und der äußeren Planetenverzahnung (8) kämmt,
wobei jedes der Satellitenräder (5) in einem Lager (9) auf dem freien Ende (19) einer flexiblen Welle (6) mit geometrischer Achse (7) drehbar montiert ist und das andere Ende (18) der Welle (6) mit dem Satellitenträger (4) fest verbunden ist,
**dadurch gekennzeichnet**,
daß die Verzahnungen Schrägverzahnungen sind,
daß die Satellitenrader (5) sich in Lagern (9) drehen, deren Innenring (13) in einem auf der Welle (6) montierten Kugelgelenk (62) verschwenkbar ist,
und daß der Innenring (13) wenigstens einen fest mit ihm verbundenen Finger (81) aufweist, dessen Endbereich (83) sich zwischen den Wandungen (84A und (84B) einer Nut (84) ausrichtet, die relativ zu dem Satellitenträger (4) fest angeordnet ist, wobei die genannten Wandungen (84A und (84B) eben und zueinander und zu der geometrischen Achse (7) parallel sind und senkrecht zu der durch die geometrischen Achsen (3, 7) definierten Ebene verlaufen.

6. Getriebe nach Anspruch 5, dadurch gekennzeichnet, daß der Innenring (13) fest mit zwei Fingern (81) verbunden ist, die an relativ zu der geometrischen Achse (7) diametral entgegengesetzten Positionen angeordnet sind.

7. Getriebe nach Anspruch 5 oder 6, dadurch gekennzeichnet, daß die Nuten (84) in einer Schulter (23) der Welle (6) angebracht sind.

## Claims

1. Transmission with orbital gears and spread load, the said transmission (1) comprising a central planetary gear (2) with a geometric axis of rotation (3), an external planetary gear (8) and at least one planet pinion (5) that meshes simultaneously with the central planetary gear (2) and the external planetary gear (8), the planet pinions (5) each being mounted so that they can rotate freely on a bearing (9) on the free end (19) of a flexible shaft (6) of geometric axis (7), the other end (18) of which is secured to the planet carrier (4), characterized in that the gears are helical gears, in that the planet pinions (5) rotate on bearings (9) of the self-aligning type and in that each planet pinion (5) is secured to the inner race (37) of a bearing (35) the outer race (38) of which slides in a direction perpendicular to the plane defined by the geometric axes (3) and (7) while the inner race (37) slides in the direction of the geometric axis (7).

2. Transmission according to Claim 1, characterized in that the bearing (35) is offset towards the planet carrier (4).

3. Transmission according to Claim 1 or 2, characterized in that the outer race (38) of the bearing (35) at its periphery comprises two planar and mutually parallel surfaces (39A) and (39B).

4. Transmission according to Claim 3, characterized in that the outer race (38) slides on its faces (39A) and (39B) between the faces (40A) and (40B) of a guide (40), the said faces (40A, 40B) themselves being planar, mutually parallel, parallel to the axis (7) and perpendicular to the plane defined by the axes (3) and (7).

5. Transmission with orbital gears and spread load, the said transmission (1) comprising a central planetary gear (2) with a geometric axis of rotation (3), an external planetary gear (8) and at least one planet pinion (5) that meshes simultaneously with the central planetary gear (2) and the external planetary gear (8), the planet pinions (5) each being mounted so that they can rotate freely on a bearing (9) on the free end (19) of a flexible shaft (6) of geometric axis (7), the other end (18) of which is secured to the planet carrier (4), characterized in that the gears are helical gears, in that the planet pinions (5) rotate on bearings (9) of which the inner race (13) pivots on a swivel joint (62) mounted on the shaft (6), and in that the said inner race (13) is secured to at least one pin (81) the end (83) of which fits between the walls (84A) and (84B) of a slot (84), the said slot (84) being stationary with respective to the planet carrier (4), the said walls (84A) and (84B) being planar, parallel to each other and to the geometric axis (7) and perpendicular to the plane defined by the geometric axes (3) and (7).

6. Transmission according to Claim 5, characterized in that the inner race (13) is secured to two pins (81) which are diametrically opposed with respect to the geometric axis (7).

7. Transmission according to Claim 5 or 6, characterized in that the slots (84) are made in a shoulder (23) of the shaft (6).
